# EUROPEAN PATENT SPECIFICATION

(11) **EP 3 868 147 B1**
(45) Date of publication and mention of the grant of the patent: **03.07.2024**
(21) Application number: 18937345.9
(22) Date of filing: 18.10.2018
(51) Int. Cl.: H04W 36/00, H04W 36/04, H04W 36/16, H04W 36/30, H04W 36/02, H04W 92/20, H04W 74/08

(54) **METHOD, APPARATUS AND SYSTEM FOR DETERMINING CANDIDATE SET**
VERFAHREN, VORRICHTUNG UND SYSTEM ZUR BESTIMMUNG EINES KANDIDATENSATZES
PROCÉDÉ, APPAREIL, ET SYSTÈME POUR LA DÉTERMINATION D'UN ENSEMBLE CANDIDAT

(43) Date of publication of application: 25.08.2021
(73) Proprietor: Nokia Technologies Oy, 02610 Espoo (FI)
(72) Inventor: BEDEKAR, Anand, Murray Hill, NJ 07974-0636 (US)
(74) Representative: TBK
(86) International application number: PCT/US2018/056498
(87) International publication number: WO 2020/081086

(56) References cited:
- WO-A1-2014/062104
- WO-A1-2014/107086
- WO-A1-2016/171731
- US-A1- 2003 096 624
- US-A1- 2007 189 282
- US-A1- 2011 105 121
- US-A1- 2012 082 058
- US-A1- 2014 211 756
- US-A1- 2014 293 965
- US-A1- 2015 146 692

## Description

### BACKGROUND

### Field

Example embodiments relate generally to determining a candidate set of base stations in a communication network.

### Related Art

In a communication network, a user equipment (UE) conducts data communications with one or more base stations in the network. The UE may have an associated candidate set of base stations that the UE may rely on to conduct the data communications.

Related art is known from the document US 2015/146692 A1 relating to a technique for cell switching, the document WO 2016/171731 A1 relating to a technique for common random access channel resource based coordinated random access, and the document WO 2014/062104 A1 relating to a technique for selection of access points for coordinated multipoint uplink reception.

### SUMMARY

According to the present invention, there are provided a method, a network node and a computer program product, as defined by the claims.

Irrespective thereof, the present disclosure encompasses the following example embodiments.

At least one example embodiment is directed toward a method for determining a candidate set of base stations in a communication network.

In one example embodiment, the method includes, forming, by at least one first processor of a first network node, a first set of base stations; receiving, by the at least one first processor, random access channel (RACH) information from one or more of the first set of base stations for a first transmission time interval; determining, by the at least one first processor, the candidate set of base stations for the first transmission time interval based on the RACH information, the candidate set of base stations being in the first set of base stations; and controlling, by the at least one first processor, an operation of the communication network based on the candidate set of base stations.

The forming of the first set of base stations includes, receiving neighbor cell information from at least one base station in the first set of base stations, determining a second set of base stations based on the neighbor cell information, determining selection criteria for the second set of base stations, the selection criteria being at least one of an available transport bandwidth or latency information, and selecting the first set of base stations from the second set of base stations based on the selection criteria.

In one example embodiment, the receiving of the RACH information includes, notifying one or more of the first set of base stations of a RACH opportunity associated with the first transmission time interval.

In one example embodiment, the receiving of the RACH information includes, receiving signal data from the one or more of the first set of base stations, the signal data being the RACH information.

In one example embodiment, the receiving of the RACH information includes, notifying one or more of the first set of base stations of a RACH opportunity associated with the first transmission time interval, and transmitting a first set of preambles to the one or more of the first set of base stations, the first set of preambles including at least a root sequence index and cyclic shifts for the RACH opportunity, and receiving RACH detection information from the one or more of the first set of base stations based on the first set of preambles, the RACH detection information being the RACH information.

In one example embodiment, the determining of the candidate set of base stations includes, receiving a first RACH signal and performing RACH detection based on a RACH opportunity associated with the first transmission time interval, detecting a first preamble in the first RACH signal, detecting if the first preamble is in the RACH information from the one or more of the first set of base stations, and selecting the candidate set of base stations, from the first set of base stations, based on the detecting of the first preamble in the RACH information.

In one example embodiment, the method further includes estimating timing advance information for the one or more of the candidate set of base stations relative to a user equipment (UE), and further selecting the candidate set of base stations based on the timing advance information.

In one example embodiment, the determining of the candidate set of base stations further includes, further selecting the candidate set of base stations based on a received signal strength information.

In one example embodiment, the method further includes performing data communications with a user equipment (UE) during a second transmission time interval that follows the first transmission time interval, the performing of the data communications occurring following the determining of the candidate set of base stations, receiving, from one or more of the candidate set of base stations, an indication of a received signal corresponding to an uplink shared channel transmission by the UE during the second transmission time interval, and determining a decoding status of the data communications with the UE based on indication of the received signal, wherein the first network node is a serving base station for the UE.

In one example embodiment, the method further includes obtaining cell identifier information and neighbor list information from a first base station in the first set of base stations, and wherein the first network node is hosted in at least one second processor of the first base station.

Another example embodiments is directed toward a method for determining a candidate set of base stations in a communication network.

In one example embodiment, the method includes receiving, by at least one first processor of a first network node, a first notification from a serving base station, the first notification indicating a random access channel (RACH) opportunity for a first transmission time interval; receiving, by the at least one first processor, a signal during the RACH opportunity for the first transmission time interval; and transmitting, by the least one first processor, received signal information regarding the received signal to the serving base station to cause the serving base station to determine the candidate set of base stations.

The method further includes transmitting at least one of an available transport bandwidth or latency information to a serving base station, the available transport bandwidth or the latency information being further included in the received signal information.

In one example embodiment, the method further includes receiving a third notification from the serving base station, the third notification indicating whether or not the first network node has been included in a candidate set for a UE.

In one example embodiment, the transmitting of the received signal information regarding the received signal includes, transmitting signal data to the serving base station.

In one example embodiment, the transmitting of the received signal information regarding the received signal includes, receiving a first set of preambles from the serving base station, performing RACH detection using the first set of preambles, and transmitting RACH detection information to the serving base station based on the RACH detection, the RACH detection information indicating whether one or more of the first set of preambles was detected within the signal received within the first transmission time interval.

In one example embodiment, the method further includes transmitting time advance information to the serving base station, the time advance information being further included in the received signal information.

At least another example embodiment is directed toward a network node.

In one example embodiment, the network node includes at least one memory storing computer-readable instructions, and at least one first processor configured to execute the computer-readable instructions such that the at least one first processor is configured to, form a first set of base stations, receive random access channel (RACH) information from one or more of the first set of base stations for a first transmission time interval, determine a candidate set of base stations for the first transmission time interval based on the RACH information, the candidate set of base stations being in the first set of base stations, and control an operation of a communication network based on the candidate set of base stations.

In one example embodiment, the at least one first processor is further configured to form the first set of base stations by, receiving neighbor cell information from at least one base station in the first set of base stations, determining a second set of base stations based on the neighbor cell information, determining selection criteria for the second set of base stations, the selection criteria being at least one of an available transport bandwidth or latency information, and selecting the first set of base stations from the second set of base stations based on the selection criteria.

In one example embodiment, the at least one first processor is further configured to receive the RACH information by, notifying one or more of the first set of base stations of a RACH opportunity associated with the first transmission time interval, and receiving signal data from the one or more of the first set of base stations, the signal data being the RACH information.

In one example embodiment, the at least one first processor is further configured to receive the RACH information by, notifying one or more of the first set of base stations of a RACH opportunity associated with the first transmission time interval, and transmitting a first set of preambles to the one or more of the first set of base stations, the first set of preambles including at least a root sequence index and cyclic shifts for the RACH opportunity, and receiving RACH detection information from the one or more of the first set of base stations based on the first set of preambles, the RACH detection information being the RACH information.

In one example embodiment, the at least one first processor is further configured to determine the candidate set of base stations by, receiving a first RACH signal and performing RACH detection based on a RACH opportunity associated with the first transmission time interval, detecting a first preamble in the first RACH signal, detecting if the first preamble is in the RACH information from the one or more of the first set of base stations, and selecting the candidate set of base stations, from the first set of base stations, based on the detecting of the first preamble in the RACH information.

In one example embodiment, the at least one first processor is further configured to, perform data communications with a user equipment (UE) during a second transmission time interval that follows the first transmission time interval, the performing of the data communications occurring following the determining of the candidate set of base stations, receive, from one or more of the candidate set of base stations, an indication of a received signal corresponding to an uplink shared channel transmission by the UE during the second transmission time interval, and determine a decoding status of the data communications with the UE based on indication of the received signal, wherein the network node is a serving base station for the UE.

Another example embodiment is directed toward a network node.

In one example embodiment, the network node includes at least one memory storing computer-readable instructions, and at least one first processor configured to execute the computer-readable instructions such that the at least one first processor is configured to, receive a first notification from a serving base station, the first notification indicating a random access channel (RACH) opportunity for a first transmission time interval, receive a signal during the RACH opportunity for the first transmission time interval, and transmit received signal information regarding the received signal to the serving base station to cause the serving base station to determine a candidate set of base stations.

In one example embodiment, the at least one first processor is further configured to, transmit at least one of an available transport bandwidth or latency information to a serving base station, the available transport bandwidth or the latency information being further included in the received signal information, and receive a third notification from the serving base station, the third notification indicating whether or not the network node has been included in a candidate set for a UE.

In one example embodiment, the at least one first processor is further configured to transmit the received signal information regarding the received signal by, transmitting signal data to the serving base station, receiving a first set of preambles from the serving base station, performing RACH detection using the first set of preambles, and transmitting RACH detection information to the serving base station based on the RACH detection, the RACH detection information indicating whether one or more of the first set of preambles was detected within the signal received within the first transmission time interval.

### BRIEF DESCRIPTION OF THE DRAWINGS

FIG. 1 illustrates a network node, in accordance with an example embodiment;
FIG. 2A illustrates a communication network, in accordance with an example embodiment;
FIG. 2B illustrates a portion of the communication network, in accordance with an example embodiment;
FIG. 3 illustrates a virtualized base station deployment, in accordance with an example embodiment;
FIG. 4 illustrates an eNB base station deployment, in accordance with an example embodiment;
FIG. 5 illustrates a communication diagram for a method of neighbor set formation using a virtualized deployment, in accordance with an example embodiment;
FIG. 6 illustrates a communication diagram for a method of neighbor set formation using an eNB deployment, in accordance with an example embodiment;
FIG. 7 illustrates a communication diagram for a method of candidate set formation using a virtualized deployment, in accordance with an example embodiment;
FIG. 8 illustrates a communication diagram for a method of candidate set formation using an eNB deployment, in accordance with an example embodiment; and
FIG. 9 illustrates a flowchart for a method of candidate set formation at a serving base station, in accordance with an example embodiment.

### DETAILED DESCRIPTION

While example embodiments are capable of various modifications and alternative forms, embodiments thereof are shown by way of example in the drawings and will herein be described in detail. It should be understood, however, that there is no intent to limit example embodiments to the particular forms disclosed, but on the contrary, example embodiments are to cover all modifications, equivalents, and alternatives falling within the scope of the claims. Like numbers refer to like elements throughout the description of the figures.

Although the terms first, second, etc. may be used herein to describe various elements, these elements should not be limited by these terms. These terms are only used to distinguish one element from another. For example, a first element could be termed a second element, and similarly, a second element could be termed a first element, without departing from the scope of this disclosure. As used herein, the term "and/or," includes any and all combinations of one or more of the associated listed items.

When an element is referred to as being "connected," or "coupled," to another element, it can be directly connected or coupled to the other element or intervening elements may be present. By contrast, when an element is referred to as being "directly connected," or "directly coupled," to another element, there are no intervening elements present. Other words used to describe the relationship between elements should be interpreted in a like fashion (e.g., "between," versus "directly between," "adjacent," versus "directly adjacent," etc.).

The terminology used herein is for the purpose of describing particular embodiments only and is not intended to be limiting. As used herein, the singular forms "a," "an," and "the," are intended to include the plural forms as well, unless the context clearly indicates otherwise. It will be further understood that the terms "comprises," "comprising," "includes," and/or "including," when used herein, specify the presence of stated features, integers, steps, operations, elements, and/or components, but do not preclude the presence or addition of one or more other features, integers, steps, operations, elements, components, and/or groups thereof.

It should also be noted that in some alternative implementations, the functions/acts noted may occur out of the order noted in the figures. For example, two figures shown in succession may in fact be executed substantially concurrently or may sometimes be executed in the reverse order, depending upon the functionality/acts involved.

Specific details are provided in the description to provide a thorough understanding of example embodiments. However, it will be understood by one of ordinary skill in the art that example embodiments may be practiced without these specific details. For example, systems may be shown in block diagrams so as not to obscure the example embodiments in unnecessary detail. In other instances, well-known processes, structures and techniques may be shown without unnecessary detail in order to avoid obscuring example embodiments.

As discussed herein, illustrative embodiments are described with reference to acts and symbolic representations of operations (e.g., in the form of flow charts, flow diagrams, data flow diagrams, structure diagrams, block diagrams, etc.) that may be implemented as program modules or functional processes include routines, programs, objects, components, data structures, etc., that perform particular tasks or implement particular abstract data types and may be implemented using existing hardware at, for example, existing endpoints, clients, gateways, nodes, agents, controllers, computers, cloud based servers, web servers, proxies or proxy servers, application servers, and the like. As discussed later, such existing hardware may include, inter alia, one or more Central Processing Units (CPUs), system-on-chip (SOC) devices, digital signal processors (DSPs), application-specific-integrated-circuits, field programmable gate arrays (FPGAs) computers or the like.

Although a flow chart or communication flow diagram may describe the operations as a sequential process, many of the operations may be performed in parallel, concurrently or simultaneously. In addition, the order of the operations may be re-arranged. A process may be terminated when its operations are completed, but may also have additional steps not included in the figure. A process may correspond to a method, function, procedure, subroutine, subprogram, etc. When a process corresponds to a function, its termination may correspond to a return of the function to the calling function or the main function.

As disclosed herein, the term "storage medium", "computer readable storage medium" or "non-transitory computer readable storage medium" may represent one or more devices for storing data, including read only memory (ROM), random access memory (RAM), magnetic RAM, core memory, magnetic disk storage mediums, optical storage mediums, flash memory devices and/or other tangible machine readable mediums for storing information. The term "computer-readable medium" may include, but is not limited to, portable or fixed storage devices, optical storage devices, and various other mediums capable of storing, containing or carrying instruction(s) and/or data.

Furthermore, example embodiments may be implemented by hardware, software, firmware, middleware, microcode, hardware description languages, or any combination thereof. When implemented in software, firmware, middleware or microcode, the program code or code segments to perform the necessary tasks may be stored in a machine or computer readable medium such as a computer readable storage medium. When implemented in software, a processor or processors will perform the necessary tasks.

A code segment may represent a procedure, function, subprogram, program, routine, subroutine, module, software package, class, or any combination of instructions, data structures or program statements. A code segment may be coupled to another code segment or a hardware circuit by passing and/or receiving information, data, arguments, parameters or memory contents. Information, arguments, parameters, data, etc. may be passed, forwarded, or transmitted via any suitable means including memory sharing, message passing, token passing, network transmission, etc.

The terms "including" and/or "having", as used herein, are defined as comprising (i.e., open language). The term "coupled", as used herein, is defined as connected, although not necessarily directly, and not necessarily mechanically. Terminology derived from the word "indicating" (e.g., "indicates" and "indication") is intended to encompass all the various techniques available for communicating or referencing the object/information being indicated. Some, but not all, examples of techniques available for communicating or referencing the object/information being indicated include the conveyance of the object/information being indicated, the conveyance of an identifier of the object/information being indicated, the conveyance of information used to generate the object/information being indicated, the conveyance of some part or portion of the object/information being indicated, the conveyance of some derivation of the object/information being indicated, and the conveyance of some symbol representing the object/information being indicated.

According to example embodiments, clients, gateways, nodes, agents controllers, computers, cloud based servers, web servers, application servers, proxies or proxy servers, and the like, may be (or include) hardware, firmware, hardware executing software or any combination thereof. Such hardware may include one or more Central Processing Units (CPUs), system-on-chip (SOC) devices, digital signal processors (DSPs), application-specific-integrated-circuits (ASICs), field programmable gate arrays (FPGAs) computers or the like configured as special purpose machines to perform the functions described herein as well as any other well-known functions of these elements. In at least some cases, CPUs, SOCs, DSPs, ASICs and FPGAs may generally be referred to as processing circuits, processors and/or microprocessors.

The endpoints, clients, gateways, nodes, agents, controllers, computers, cloud based servers, web servers, application servers, proxies or proxy servers, and the like, may also include various interfaces including one or more transmitters/receivers connected to one or more antennas, a computer readable medium, and (optionally) a display device. The one or more interfaces may be configured to transmit/receive (wireline and/or wirelessly) data or control signals via respective data and control planes or interfaces to/from one or more network elements, such as switches, gateways, termination nodes, controllers, servers, clients, and the like.

Benefits, other advantages, and solutions to problems have been described above with regard to specific example embodiments. However, the benefits, advantages, solutions to problems, and any element(s) that may cause or result in such benefits, advantages, or solutions, or cause such benefits, advantages, or solutions to become more pronounced are not to be construed as a critical, required, or essential feature or element of any or all the claims.

Example embodiments may be utilized in conjunction with various telecommunication networks and systems, such as the following (where this is only an example list): Universal Mobile Telecommunications System (UMTS); Global System for Mobile communications (GSM); Advance Mobile Phone Service (AMPS) system; the Narrowband AMPS system (NAMPS); the Total Access Communications System (TACS); the Personal Digital Cellular (PDC) system; the United States Digital Cellular (USDC) system; the code division multiple access (CDMA) system described in EIA/TIA IS-95; a High Rate Packet Data (HRPD) system, Worldwide Interoperability for Microwave Access (WiMAX); Ultra Mobile Broadband (UMB); 3^{rd} Generation Partnership Project LTE (3GPP LTE); and 5G networks.

### General Methodology:

Narrowband Internet of Things (NB-IOT) is a capability allowing the use of low-cost devices to be deployed in a wide variety of coverage scenarios, from outdoor (line of sight or non-line-of-sight) environments to deep inside building (heavy path loss) locations. The devices, which may for instance be user equipments (UEs), may have differing capabilities (battery constraint vs powered by mains power, channel estimation accuracy, etc). NB-IOT provides a high level of coverage, up to a maximum coupling loss (MCL) of 164dB, to account for a wide range of deployment scenarios and constrained device capabilities. NB-IOT standards in 3GPP provide a number of options for an Evolved Node B (eNodeB) base station in order to improve coverage while providing flexible repetition options and hybrid automatic request (hybrid ARQ, or HARQ). Generally in NB-IOT, an uplink coverage may cause a bottleneck in throughput (as compared to the downlink coverage), due to a limited device transmit power. Thus, techniques that improve the uplink coverage will relieve this bottleneck. A variety of technologies have been defined to support internet-of-things (IOT) operation in cellular networks. These include NB-IOT, introduced in 3GPP Release 13 (Rel-13), as well as eMTC (enhanced Machine-Type Communications), LTE-M (an extension of LTE meant to support IOT, sometimes described as LTE-Category-M1), etc. The subsequent description generically uses the term Narrowband Internet-of-Things, and the abbreviation NB-IOT to mean any of these technologies, and depending on the context, may also refer specifically to the NB-IOT technology introduced in 3GPP Rel-13 to support introduction of low-cost devices for internet-of-things, along with corresponding capabilities in the Radio Access Network (RAN).

NB-IOT may be instantiated in an eNB, and the eNB may host both long-term evolution (LTE) cells and NB-IOT cells. An NB-IOT cell may be in-band relative to an LTE-cell, or may be in a guard band relative to an LTE cell. In some cases, the NB-IOT cell may be in a standalone band.

In LTE Uplink Coordinated Multi-Point (UL CoMP) operation, a candidate set of cells for a given UE refers to a set of cells who may be called upon to receive the UE's signal in addition to its serving base station, and aid the serving base station in decoding the received signal. The candidate set of cells for a given UE will typically be a subset of the set of neighbor cells of the serving base station, and operate on the same frequency as the serving base station. Such coordinated reception may give significant improvements in wireless coverage. It is desirable to obtain these improvements provided by UL CoMP for NB-IOT operation as well. However, some important differences between LTE and NB-IOT operation should be noted, due to which candidate set determination for NB-IOT cannot be performed in the same way as for LTE. The candidate set for a given UE in LTE may be determined based on measurements provided by the UE related to received signal strength of neighboring base stations. The measurements provided by the UE may, for instance, be a reference signal received power (RSRP) or reference signal received quality (RSRQ) measurement of a neighbor cell, where the measurement can be included in a radio resource control (RRC) measurement report (either periodic or event report) provided by the UE to the serving base station. The candidate set in LTE may be determined, for example, by selecting the neighbor cells for which the RSRP reported by the UE in measurement reports was higher than for other neighbor cells. However, in NB-IOT, the UE does not measure RSRP on neighbor cells, so it is not possible to determine a candidate set using measurement reports. Further, it is not desirable to configure neighbor cell measurements at the UE to obtain RRC reports, as this would impact a load on the battery of the UE and also consume available bandwidth on a potentially narrow band. Additionally, data transmissions of the UE in NB-IOT may last for quite a short time (e.g. only a few protocol data units (PDUs) may need to be transmitted), so it is necessary to decide the candidate set early in the connection in order to garner UL CoMP benefits for NB-IOT.

### Uplink Coordinated Multi-Point Transmission/Reception (UL CoMP):

Uplink coordinated multi-point transmission/reception (UL CoMP) is a technique that can improve uplink coverage and cell-edge uplink throughput. UL CoMP allows a UE's signal to be jointly decoded using not only a signal received at the UE's serving cell (e.g., serving base station), but also combining the UE's signal received at other cells (e.g., other base stations). UL CoMP may help improve uplink (UL) coverage and UL cell-edge throughput, and may also improve UL capacity. Typically UL CoMP is used for physical uplink shared channel (PUSCH) and/or narrowband physical uplink shared channel (NPUSCH) data transmissions.

UL COMP may be used for LTE UEs connected to a LTE cell, which may allow intra-eNB and inter-eNB UL CoMP for LTE UEs.

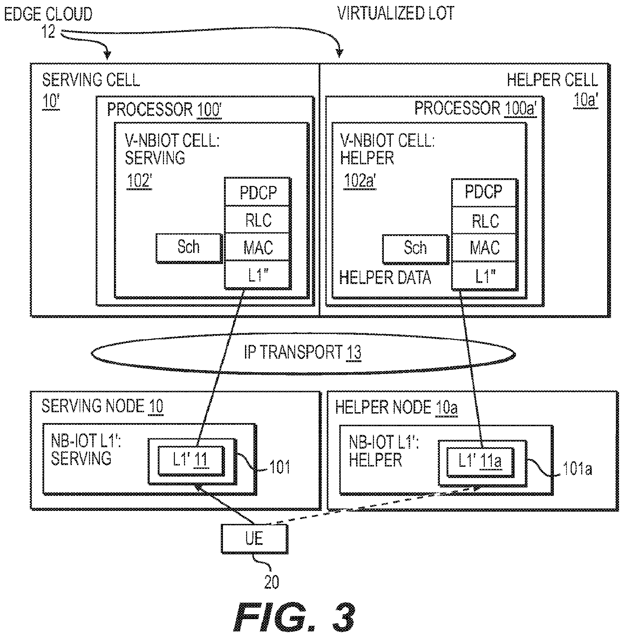

There are some key differences between NB-IOT and LTE that have a bearing on neighbor sets of base stations may be formed. These differences include: A) In LTE a neighbor set of base stations may be directly derived from a conventional neighbor relationship set up for performing handovers (for example by automatic neighbor relation, or ANR procedure) - however, there are no handovers and no neighbor-relationships in NB-IOT, and B) In LTE, UL CoMP may be used in a centralized radio access network (C-RAN) where it can be assumed that there is sufficiently low latency and high bandwidth between eNBs - but, in NB-IOT, it may be desirable to use UL CoMP even without C-RAN. A method for UL CoMP neighbor set and candidate set determination that takes the above constraints into account is therefore advantageous, where the solution is suitable for both eNB-based NB-IOT deployment and virtualized IOT solutions (see a virtualized deployment in FIG. 3).

### Structural Example Embodiments:

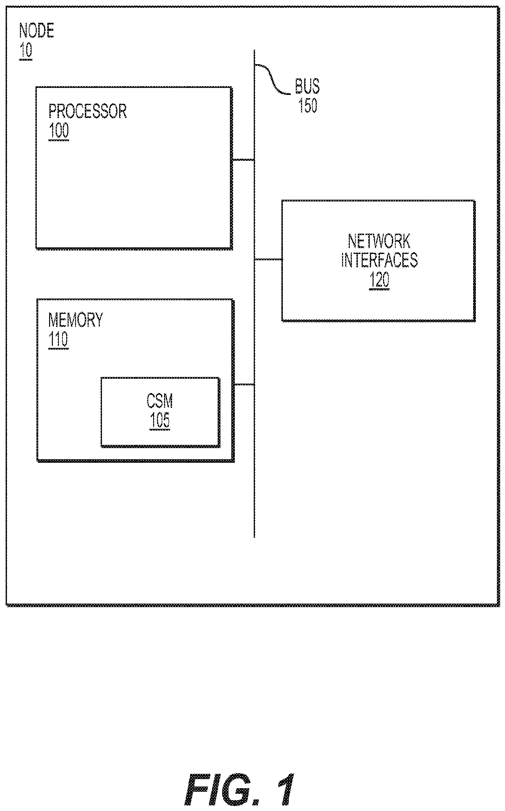

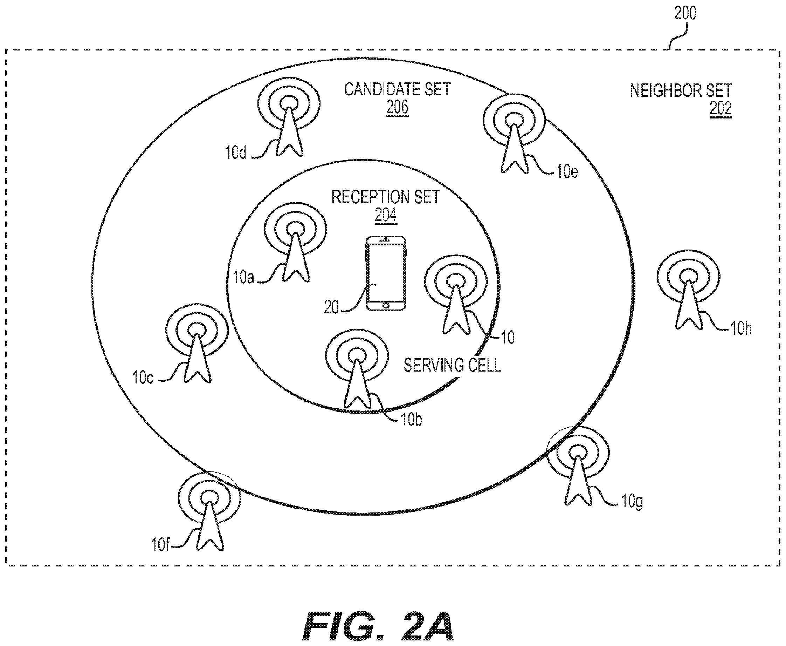

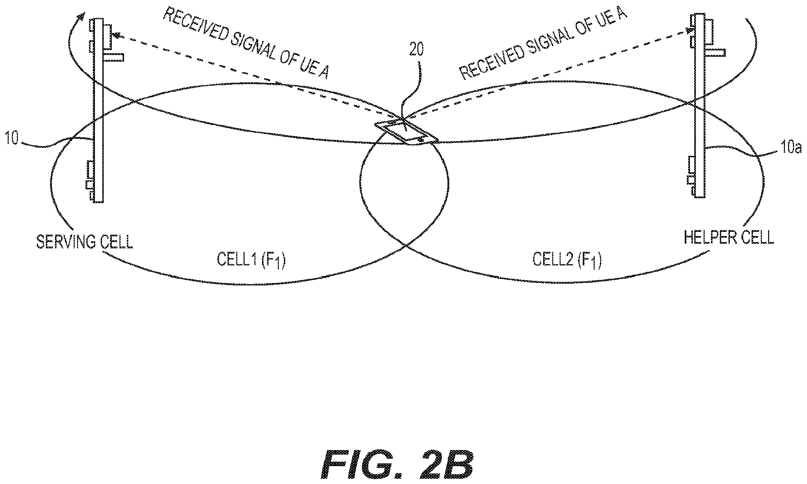

FIG. 1 illustrates a network node, in accordance with an example embodiment. The network node 10 includes the structure for an apparatus, such as a base station 10, as shown in FIG. 2. However, this same structure is also applicable to user equipment (UE) 20, also shown in FIG. 2. As shown in FIG. 1, the network node 10 is a processing device that includes a processor (CPU) 100, a memory 110, a network interface 120 and a bus 150. It will be appreciated that the network node 10 may include additional components, which have not been described for the sake of brevity.

The processor 100 may be, but not limited to, a central processing unit (CPU), a controller, and arrest medic logic unit (ALU), a digital signal processor, a microcomputer, a field programmable gate array (FPGA), an Application Specific Integrated Circuit (ASIC), a System-on-Chip (SoC), a programmable logic unit, a microprocessor, or any other device capable of performing operations in a defined manner.

The memory 110 may be a computer readable storage medium that generally includes a random access memory (RAM), read only memory (ROM), and/or a permanent mass storage device, such as a disk drive or solid state drive. The memory 110 also stores an operating system and any other routines/modules/applications for providing the functionalities of the processing device 100. These software components may also be loaded from a separate computer readable storage medium into the memory 110 using a drive mechanism (not shown). Such separate computer readable storage medium may include a disc, tape, DVD/CD-ROM drive, memory card, or other like computer readable storage medium (not shown). In some example embodiments, software components may be loaded into the memory 110 via one or more interfaces (not shown), rather than via a computer readable storage medium. It will be appreciated that the processing device may include more than one memory and more than one type of memory.

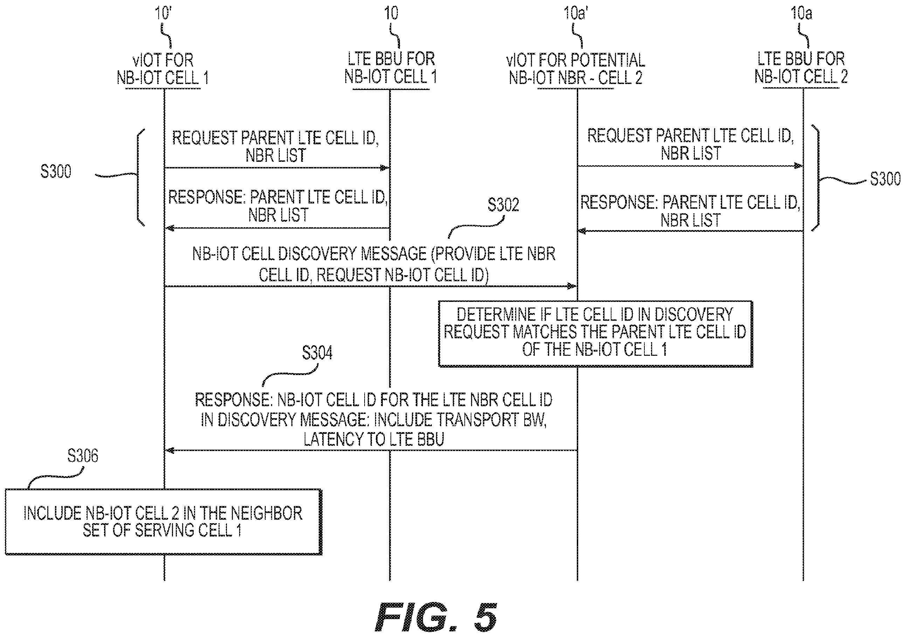

In an example embodiment, the memory 110 has a candidate set module (CSM) 105 that includes a set of computer-readable instructions that are to be performed by the processor 100. In particular, in an example embodiment, the computer-readable instructions of the CSM 105 command the processor 100 to perform any or all of the method steps disclosed herein, and in particular any or all of the method steps described in relation to FIGS. 5-9.

The network interfaces 120 may include various interfaces including one or more transmitters/receivers (or transceivers) connected to one or more antennas or wires to wirelessly or wiredly transmit/receive control and data signals. The transmitters may be devices that include hardware and software for transmitting signals including, for example, control signals or data signals via one or more wired and/or wireless connections to other network elements over a network. Likewise, the receivers may be devices that include hardware and software for receiving signals including, for example, control signals or data signals via one or more wired and/or wireless connections to other network elements over the network.

FIG. 2 illustrates a communication network 200, in accordance with an example embodiment. In an example embodiment, the communication network 200 includes a neighbor set of base stations 202 (including all of base station 10, 10a, 10b, 10c, through 10h). That is to say, the neighbor set 202 of base stations 10n (where "10n" represents any of the base stations shown in FIG. 2A) constitute the base stations within a general proximity of user equipment (UE) 20. Some of the base stations 10n in the neighbor set 10n may each be capable of performing data communications with UE 20. It should be understood that the region that each of the base stations 10n can reach may be termed a 'cell,' and this term may be used interchangeably with the term 'base station' for purposes of this document. In general the coverage area of a given base station may also be constituted into multiple cells for network planning reasons. A cell of one particular base station 10 is shown as a "serving cell" for a particular user equipment 20. The transmissions to and from the user equipment 20 are served through the base station 10, and the coverage area of the base station 10 can be termed as the `serving cell' of the user equipment 20. We may use the term 'cell' to refer to either the coverage area of transmission of a particular base station or network node, or the network node itself, depending on the context. Typically, the area within which the transmissions of the neighbor base stations can be received will have some overlap with the area within which the transmissions of a serving base station can be received. User equipment 20 may be able to also receive transmissions from one or more of the base stations in the neighbor set. Conversely, it may be possible to receive the signal of a given user equipment 20's uplink transmissions at not only its serving cell but also at one or more neighbor cells.

A reception set 204 of base stations (base stations 10, 10a and 10b) for a given UE 20 is a set of base stations that has a received signal that is used in a given transmission time interval (TTI) to receive a signal from the UE 20, and decoding of the signal may be done using the received signal at one or more of these base stations. This reception set 204 can change, from a first TTI to a second TTI, and potentially continue to change for any duration of time. The reception set 204 is a subset of a candidate set 206 of base stations.

The candidate set 206 of base stations (both the reception set 204, and also base stations 10c, 10e and 10f), are base stations that can be included in the reception set 204 for a given TTI. That is to say, if any of the candidate set 206 of base stations has a received signal with the UE 20 that is within a desirable range, then one or more of the candidate set 206 of base stations can become a reception set 204 base station. The candidate set 206 of base stations is a subset of the neighbor set 202 of the base stations in the network 200.

It should be understood that the candidate set 206 and reception set 204 of base stations is specific to the UE 20, and these sets may be different for other UEs in the network 200. Meanwhile, the neighbor set 202 of base stations may in principle also be UE-specific, though typically in practice the neighbor set 202 of base stations can often times be common across UEs within a region of the network 200 or common across UEs connected to the same serving cell. The term "helper cell" (or, "helper base station") refers to a cell in the reception set 204, but depending on context, the "helper cell" may also refer to a cell (base station) in the candidate set 206 or the reception set 204. The "helper cell" is a cell and/or base station that is not a serving base station 10. The serving base station 10 is the base station that is actively performing data communications with the UE 20 for a given TTI. That is to say, for a given TTI, the serving base station 10 is the base station that communicates data communications (as opposed to only communicating signaling and/or measurement data) with the UE 20. Often times the UE will maintain a connection to a serving base station for time durations significantly longer than a TTI.

FIG. 2B illustrates a portion of the communication network 200 (see FIG. 2A), in accordance with an example embodiment. For scenarios where the UE 20 is between base stations 10/10a, the serving base station 10 (covering cell 1) within proximity of UE 20 performs data communications with the UE 20, whereas the "helper base station" 10a (covering cell 2) is also within relative proximity to the UE 20. In an embodiment, the "helper base station" 10a receives signals from the UE 20, and the "helper base station" 10a forwards the received signals to the serving base station 10 to enable joint reception for UE 20, as described in more detail herein.

FIG. 3 illustrates a virtualized base station deployment, in accordance with an example embodiment. In an embodiment, this deployment is included in the network 200 using network nodes 10'/10a' that may be part of a virtualized NB-IOT eNB solution, wherein most baseband RAN functions for NB-IOT are hosted in network nodes 10/10a as a virtualized edge-cloud-based baseband. For one or more cells, such as the serving cell 10 and the helper cell 10a, the functions of the base station 10/10a (hosting the virtualized cell 10'/10a') may include an upper network node 102'/102a' which is typically a virtualized network function performing functions of the PDCP, RLC, and MAC layers and the scheduler as well as an upper portion of the physical layer (referred to as L1"), interfacing to a lower network node network node 11/11a, typically performing a lower part of the physical layer (referred to as L1', typically including an FFT and/or iFFT function). In FIG. 3, the upper network node part 102' of the serving cell 10, and the functions of the serving cell 10 are executed in a virtualized environment, such as a virtual machine run by a processor 100', which typically resides in a virtualized or cloud 12 environment, such as an edge cloud data center. Similarly, the upper network node part 102a' of the helper cell 10a, and the functions of the helper cell 10a are executed as a virtual environment such as a virtual machine run on processor 100a', which typically resides in a virtualized or cloud 12 environment such as an edge cloud data center. In an embodiment, the processors 100' and 100a' may be the same processor. In an embodiment, the NB-IOT functions of the lower network node part 11 (such as the lower part of the physical layer, or L1', typically including an FFT and/or IFFT function) may be executed on processor 101 (for network node 11) or processor 101a (for network node 11a). In an embodiment, the interface 13 between the upper network node 102' and the lower network node 11 parts of the serving cell 10 and/or helper cell 10a may be carried over an Internet Protocol (IP) network. In an embodiment, the serving network node 10' and the helper network node 10a are in an edge cloud 12 of the network 200. In an embodiment, the network nodes 11/11a are LTE baseband units (BBU) that host the functions of the underlying LTE cell/carrier within which NB-IOT is enabled as in-band or in guard-band. Due to this, the term "LTE BBU" refers either to the lower network node part (11/11a) or the baseband unit that hosts the functions of the underlying LTE cell. In these LTE BBUs, the processors that hosts the functions of the underlying LTE cells may be processors 100/101a, or the processors may be a different processor dedicated to this purpose. The NB-IOT virtualized functions 102'/102a' may include a protocol stack that includes: packet data convergence protocol (PDCP), radio link control (RLC), media access control layer (MAC), a scheduler, etc. The network nodes 10'/10a' include the other elements that are shown in the network node 10 (FIG. 1), though for simplicity sake these elements have not again been shown in FIG. 3.

The virtualized NB-IOT eNB solution enables high scalability of the NB-IOT baseband processing to accommodate large number of IOT users, while relieving the LTE BBU of the responsibility of dealing with large number of IOT users. Post-FFT L1' data is exchanged (for DL and UL) between the v-IOTs, or between LTE baseband units 11/11a of respective processors 100/100a of a hosting serving cell 10 or a hosting helper cell 10a. A transport connection 13 between a LTE BBU 11 and a v-IOT BBU 11a can be a relatively low bandwidth (e.g. ~6Mb/s per NB-IOT carrier). Latency needs of the transport 13 connectivity may also be relaxed (e.g. up to 10ms). With this vIOT solution, for UL CoMP an exchange of received signal data between a serving cell and a helper cell may occur within the edge cloud 12 where the v-IOT functions of the two cells are hosted, in order to improve the reception/decoding of a UE's uplink transmission.

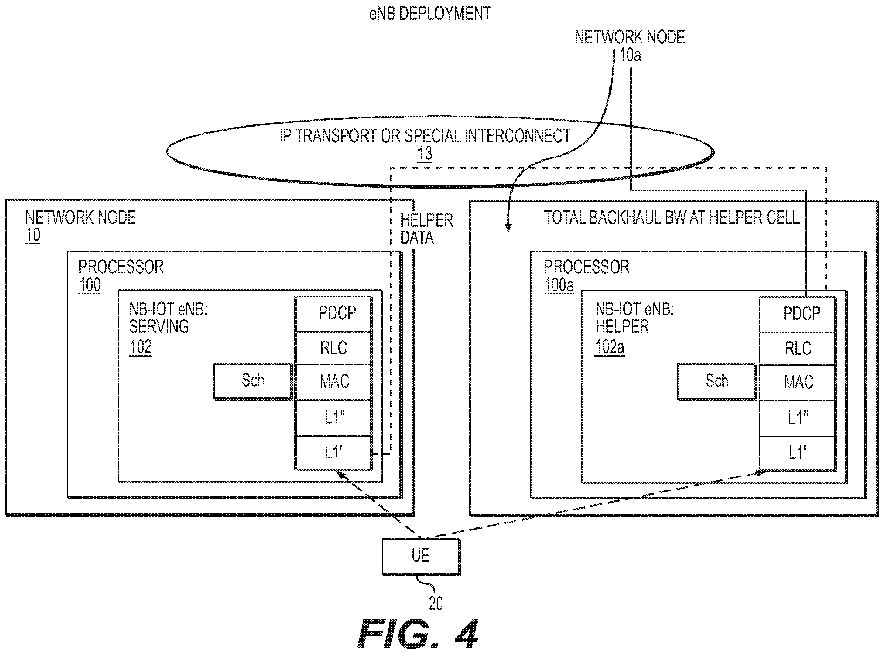

FIG. 4 illustrates a serving network node 10 and a helper node 10a that are eNB base stations (these nodes 10/10a host the serving cell and helper cell, respectively), where the network nodes 10/10a are part of a non-virtualized deployment, in accordance with an example embodiment. In an embodiment, the network node 10 for the serving cell and network node 10a for the helper cell may each be part of an LTE baseband unit that host the functions of the underlying LTE cell/carrier within which NB-IOT is enabled as in-band or in guard-band. Each network node 10/10a includes a respective processor 100/100a that hosts the respective NB-IOT functions 102/102a. The network nodes 10/10a may be interconnected by an IP transport network 13, where this IP transport network may be, for instance, a backhaul network. In such an embodiment, for uplink CoMP, received signal data may be exchanged between the helper cell and the serving cell in order to improve the reception/decoding of a UE's uplink transmission.

### Example Embodiments of a Method:

Example embodiments include a processor 100 (which may also be processor 100'/100a') in a serving NB-IOT cell 10 (which may also be network node 10'/10a') that determines a CoMP neighbor set 202 and a candidate set 206 based on RACH, as follows. While the steps below describe the processor 100 of network node 10 performing these steps, it should be understood that either of the processors 100'/100a' of the network nodes 10'/10a' may also perform these steps in a same manner. It should be understood that, during these steps, the network node 10 is the serving base station for the UE 20 (see FIG. 2A).

Step 1 - forming a neighbor set: The processor 100 request the LTE baseband unit (BBU) that hosts the functions of the underlying LTE cell/carrier within which NB-IOT is enabled as in-band or in guard-band to provide its LTE neighbor cell 202 relationships. That is to say, the processor 100 uses the neighbor relationships of the underlying LTE network to identify a preliminary neighbor set for NB-IOT. The processor 100 removes unsuitable cells 10n based on the available transport bandwidth (BW) and latency experienced by a neighbor cell 10n.

The processor 100 of the serving NB-IOT cell 10 receives neighbor cell 10n information from the underlying LTE BBU to form an initial neighbor set 202. The processor 100 determines the available transport bandwidth and latency relative to the cells 10n in the neighbor set 202. Cells 10n whose transport BW is too low or latency is too high are eliminated, and remaining cells 10n are treated as the neighbor set 202 for CoMP purposes.

Step 2 - requesting neighbor cells in the neighbor set to receive RACH transmission: The processor 100 requests neighbor cells 10n to receive RACH transmissions in a given transmission time interval (TTI) in which the serving cell has a RACH opportunity (i.e. wherein UEs can transmit random access or RACH requests) and forward received RACH data to processor 100 of the serving cell 10.

The processor 100 of the serving NB-IOT cell 10 notifies all cells 10n in the neighbor set 202 about a RACH opportunity (providing TTI number or frame/subframe number and/or other identifying information such as frequency resource etc), and requests that the neighbor cells 10n forward received RACH data for the RACH TTI. In response, each neighbor cell 10n (using processor 100a/100a') attempts to receive any signal in the specified RACH occasion, and forwards received signal data to the serving cell 10.

Two possible options exist within this step. In option 1, the neighbor cell 10n does not try to perform detection of a RACH signature within the received signal, but instead just forwards received signal data (e.g. post-FFT frequency-domain data or time-domain data) to the processor 100 of the serving cell 10. In option 2, the processor 100 of the serving cell 10 provides a set of preambles to the neighbor cell 10n (e.g. specifying the root sequence index and cyclic shifts etc) that are expected to be used by UEs attempting to send RACH request to the serving cell. The neighbor cell 10n (e.g. using processor 100a/100a') then can execute RACH detection and notify the processor 100 of the serving cell 10 of the outcome (e.g. whether the neighbor cell 10n was itself able to detect a RACH preamble within the received data, and an identifier of the preamble thus detected).

Step 3 - determine candidate set: Based on the RACH data provided by neighbor cells 10n, the processor 100 determines the candidate set 206 for any RACH detected by the processor 100 of the serving network node 10 in the TTI. This set can be used as the candidate set 206 for subsequent transmissions of the UE 20 that performed the RACH to facilitate UL CoMP. Once the candidate set is determined, for a subsequent uplink shared channel (typically NPUSCH) transmission of the UE in a subsequent TTI, one or more of the candidate set of base stations may provide receive signal data of the UE's transmission, and may provide the received signal data (or an indication thereof, e.g. the signal data after applying signal processing such as Fast Fourier Transform (FFT) operation) to the serving base station. Such received signal data may be referred to as helper data for the uplink shared channel transmission. The serving base station may then use the helper data from the one or more of the candidate set of base stations together with the signal data of the transmission received at the serving base station itself, to effect an improved decoding of the UE's uplink transmission, thereby reaping the benefits of UL CoMP.

The processor 100 first performs RACH detection in the serving cell 10 based on the RACH data received at the serving cell 10. If a RACH preamble is detected by the processor 100 in the received RACH signal for the serving cell 10, the processor 100 attempts to see whether the same preamble is present in the RACH data forwarded from the neighbor cells 10n. The processor 100 of the serving cell 10 selects the neighbor cell 10n whose data matches the received detected RACH preamble of the serving cell 10 most strongly (e.g. the same preamble is present in the RACH data forwarded from the neighbor cell and the matched filter output or received signal level for the neighbor cell's received signal is sufficiently high), and then the processor 100 includes those neighbors 10n in the candidate set 206 of the UE 20 that performed the RACH transmission. The processor 100 of the serving cell 10 also attempts to estimate a timing advance value for the UE 20 relative to the neighbor cell 10n to be included in the candidate cell 206 based on the forwarded data from the neighbor cell, and also estimates a timing advance value for the UE 20 relative to the serving cell from the received signal at the serving cell.

Inclusion of a cell 10n in either neighbor set 202 or candidate set 206 can be further filtered based on (i) received signal strength at serving cell 10 (i.e. need for additional helper data is lower if received signal at serving cell 10 is stronger, and candidate cells 10n in the candidate set 206 may be dropped if serving cell 10 signal is already strong enough unless the neighbor cell received signal is sufficiently strong) (ii) timing advance at serving cell 10 - longer timing advance detected by the processor 100 at the serving cell 10 indicates that UE 20 is further away from serving cell 10, so there may be greater need for employing UL CoMP, and then neighbor cells 10n are more likely to be retained in the candidate set 206, (iii) a difference in timing advance between serving cell 10 and candidate cell 10n - if the difference is low, then that indicates that the distance from the UE 20 to the candidate cell 10n is similar to the distance between UE 20 and serving cell 10, indicating that the UE 20 signal received at the candidate cell 10η is likely to be comparable in strength to the UE 20 signal received at the serving cell 10.

### Neighbor Set Formation - Virtualized IOT case

FIG. 5 illustrates a communication diagram for a method of neighbor set 202 formation using the virtualized deployment, in accordance with an example embodiment. In step S300, the processor 100'/100a' of each V-IOT baseband of a given NB-IOT cell 10'/10a' in the edge cloud 12 obtains from its respective LTE BBU (performing the lower network node part of the NB-IOT functions, as described earlier with reference to FIG. 3) 11/11a (inside processors 101/101a) of the "parent" LTE cell 10/10a an identifier (ID) of the intra-frequency neighbor list including the ID for the underlying LTE cell 10 (sometimes referred to as `parent LTE cell'), such as an extended cell global identifier (ECGI) or a physical cell identifier (PCI). The ID for the parent LTE Cell 10 is the identifier for the "nearest" LTE cell 10 for the provided NB-IOT cell: (1) if NB-IOT is in-band, then the parent cell ID is the LTE cell ID of the cell within whose bandwidth the NB-IOT cell is formed; and (2) if NB-IOT is a guard band cell, or a standalone cell, then the parent LTE cell is the cell whose transmission carrier is nearest to the NB-IOT transmission carrier.

In step S302, the processor 100' of the V-IOT eNB 10' issues a discovery message within the edge cloud 12 (e.g. a broadcast message, or a request to a service-discovery server), providing a LTE Cell ID of an intra-frequency neighbor 10a' of its underlying or parent LTE cell 10a ID and an identifier of the NB-IOT carrier (e.g. a physical resource block identifier within the parent LTE cell).

In step S304, the processor 100' of the V-IOT baseband 10' receives back (either from another V-IOT baseband, or from the processor 100a' of the service-discovery server 10a') a response that provides the addressing information (e.g. an IP address within the edge cloud 12) and NB-IOT cell ID of the v-IOT baseband 100a' that hosts an NB-IOT cell whose parent LTE cell ID (hosted at LTE BBU 11a) matches the cell ID in the discovery message, as well as the NB-IOT carrier identifier. Additional data provided with the response can include the transport latency and/or BW between the processor 100a' of the responding v-IOT baseband and the processor 101a of the LTE BBU 11a, a number or fraction/ratio of successful LTE handovers between the respective parent LTE cells of vIOT baseband 100' and 100a', signal measurements such as RSRP made by UEs in the LTE parent cell of baseband 100a' of the parent LTE cell of baseband 100', etc. This data may be obtained by the processor 100a' from the LTE BBU 11a, so that it can provide the data to the vIOT baseband processor 100'.

In step S306, the processor 100' of the NB-IOT cell 10' (vIOT 102') decides whether to include NB-IOT cell 2 (helper cell 10a') in the neighbor set 202. This is accomplished if the transport latency and BW is within an acceptable range, and it is excluded otherwise. Additional criteria for inclusion may include: a number or ratio of successful handovers between the LTE parent cells, or RSRP signal measurements made by the LTE parent cells of their respective neighbor cells (which can be included in the response from the LTE BBU to facilitate this decision).

### Neighbor Set Formation - eNB (Non-Virtualized) Case:

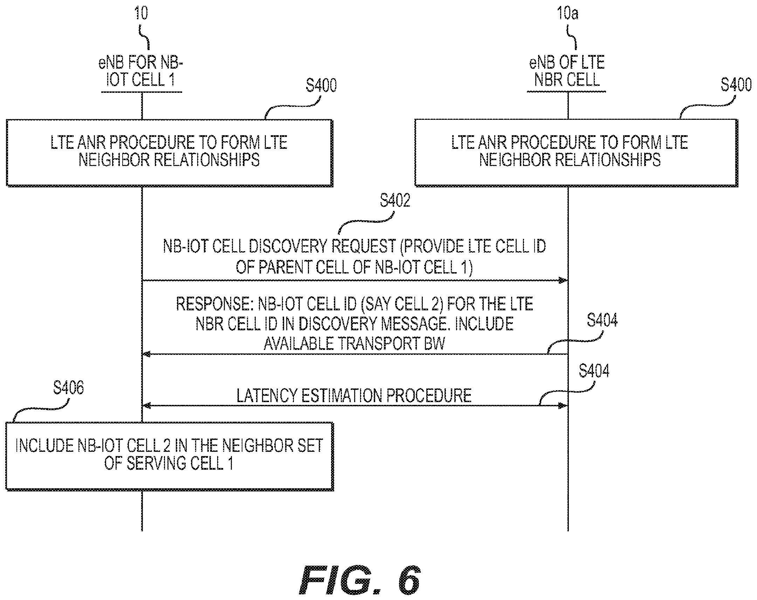

FIG. 6 illustrates a communication diagram for a method of neighbor set 202 formation using an eNB deployment, in accordance with an example embodiment. In step S400, the processor 100 of the serving LTE eNB 10 use a LTE automatic neighbor relation (ANR) procedure to form conventional LTE neighbor relationships with neighboring base stations 10n. In step S402, the processor 100 for the serving eNB 10 for NB-IOT cell 1 sends a NB-IOT cell discovery request message (over a 3GPP X2 link) to the processor 100a of an intra-frequency LTE neighbor cell 10a of the parent LTE cell of NB-IOT cell 1. The relevant LTE neighbor cell ID may be included in the discovery message.

In step S404, the processors 100a of the eNB 10a of the LTE neighbor cell responds back with NB-IOT cell ID and NB-IOT carrier ID. In step S406, the processor 100 of the serving cell 10 includes the NB-IOT cell 2 in the neighbor set 202 for UE 20. The message between eNBs 10/10a may go over a 3GPP X2 link.

### Candidate Set Formation - Virtualized IOT Case:

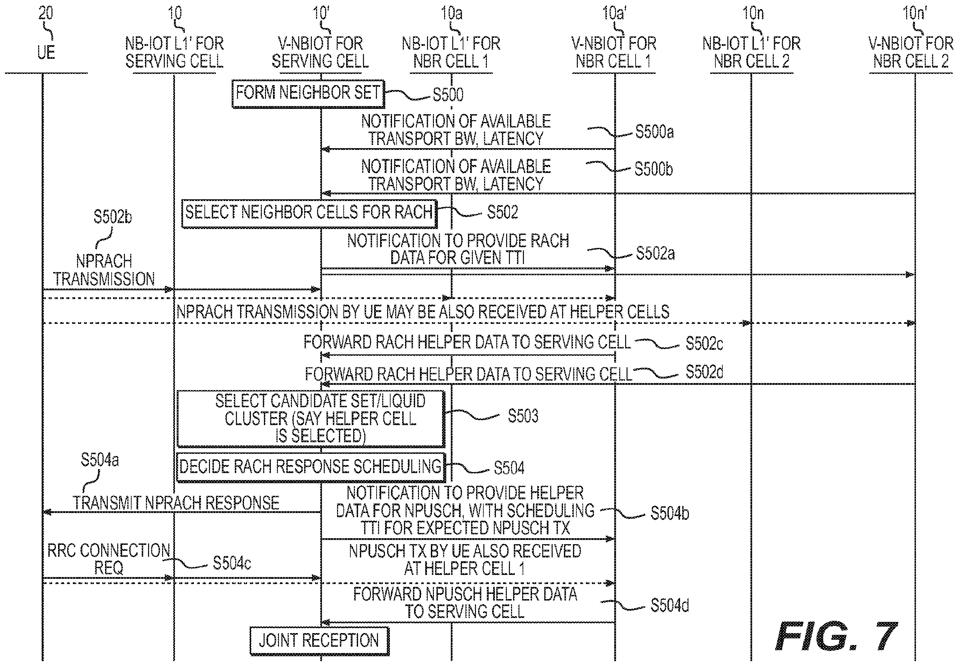

FIG. 7 illustrates a communication diagram for a method of candidate set 206 formation using a virtualized deployment, in accordance with an example embodiment. Helper cell 10a' (in cell region 1) and helper cell 10n' (in cell region 2) are neighbor cells which may be potential candidate cells that may be added to the candidate set 206. At the time of a RACH occasion or TTI, the processor 100' of the serving cell 10' asks both of them to send received data for the RACH TTI, and selects one (or more) helper cells 10a'/10n' to form the candidate set 206 for a UE (such as UE 20) which sends a RACH request in that TTI. In an embodiment, an assumption for this method if that the RACH receiver is implemented at v-NBIOT.

In step S500, the processors 100'/100a' of the cells 10'/10a' form an initial neighbor set 202, as described above in more detail. This is accomplished in part by the processor 100' receiving available transport bandwidth from the processors 100a'/100n' of cells 10a'/10n' (S500a and S500b).

In step S502, the processor 100' for node 10' selects neighbor cells for receiving the RACH signal. This is accomplished in part by the processor 100' of the serving cell 10' sending a notification to cells 10a'/10n' to provide RACH data. In step S502b, the UE 20 sends a NB-IoT physical random access channel (NPRACH) transmission to the processors of cells 10, 10', 10a, 10a', 10n and 10n', and the processors 100a'/100n' of cells 10a'/10n' forward received RACH signal data (also known as helper data) to the processor 100' of the serving cell 10' (steps S502c/S502d). The processor 100' selects the candidate set in step S503, which may include cell 10a'.

In step S504, the processor 100' determines a RACH response that includes the following. The processor 100' of the serving node 10' transmits a NPRACH response to the processors of the UE 20 (step S504a). For any subsequent uplink narrowband physical uplink shared channel (NPUSCH) transmission of UE 20, the processor 100' of serving cell node 10' may send a notification to the processors of one or more of the cells in the candidate set, such as 10a', to provide helper data for the NPUSCH transmission(S504b). In a subsequent TTI, the UE 20 transmits a connection request, which may be received not only by serving cell 10' but also (based on the notification from serving cell 10' at step S504b) by the processor 100a' of cell 10a' in the candidate set. The processors 100a' of cell 10a' forwards the NPUSCH helper data to the processor 100' of the serving cell 10'. Using this helper data, the processor 100' of the serving cell can then perform improved reception/decoding of the uplink transmitted signal of UE 20.

### Candidate Set Formation - eNB (Non-Virtualized) Case:

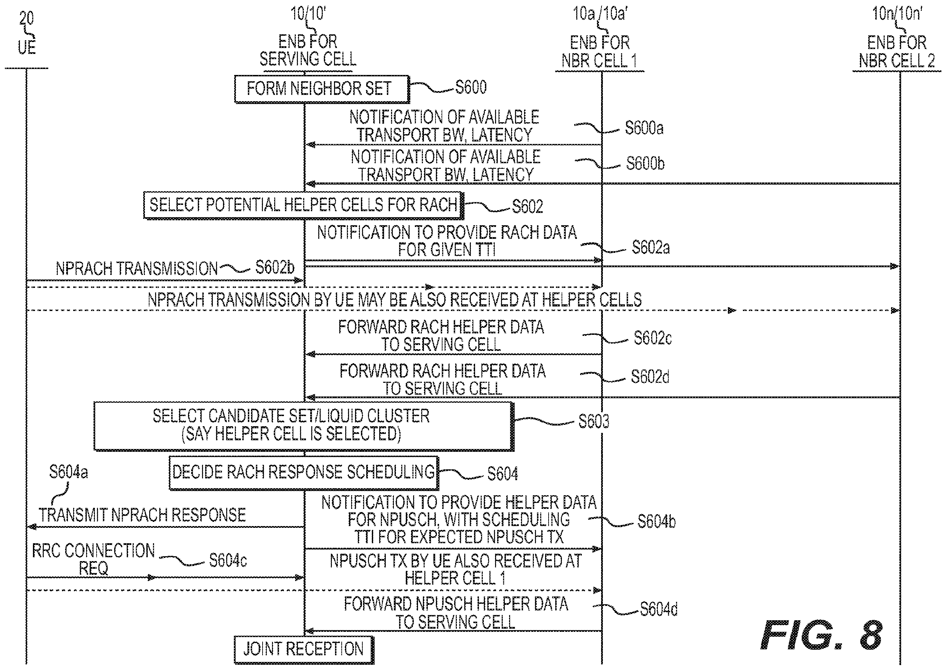

FIG. 8 illustrates a communication diagram for a method of candidate set formation using either an eNB deployment or a virtualized deployment, in accordance with an example embodiment. While this method is described in relation to the eNB deployment (FIG. 4), it should be understood that this description applies equally to the virtualized deployment (FIG. 3). Neighbor cell 1 (node 10a) and Neighbor 2 (node 10n) are potential candidate cells for the candidate set 206. At the time of RACH, the processor 100 of serving cell 10 asks both of the nodes 10al10n to send received data for the RACH TTI, and selects one (or more) cells (only one helper 10a, in this example) to form the candidate set 206 for this UE 20. In an embodiment, messages between the eNBs may occur over a 3GPP X2 link.

In step S600, the processor 100 of the serving node 10 forms neighbor set 202. This is accomplished in part by receiving notification of available transport bandwidth from the respective processors 100a'/100n' of node 10al10n.

In step S602, a processor 100 serving node 10 selects potential helper cells for RACH. This is accomplished at least in part by the processor 100 sending a notification to provide RACH data for a given TTI to nodes 10al10n (S602a). The UE 20 send a NPRACH transmission to nodes 10 (S602b). This NPRACH transmission may also be received by nodes 10a and 10n (S602b).

In step S603, the processor 100 of node 10 selects the candidate set. In step S604, the processor 100 determines a RACH response. This is accomplished at least in part by the processor 100 transmitting a NPRACH response to UE 20 (S604a) and the patient to provide helper data for NPUSCH with scheduling TTI (S604b). The UE 20 sends a RRC connection request to nodes 10 and 10a (S604c). The processor 100a of node 10a forwards NPUSCH helper data to serving node 10.

### Candidate Set Formation - details of operation at serving cell:

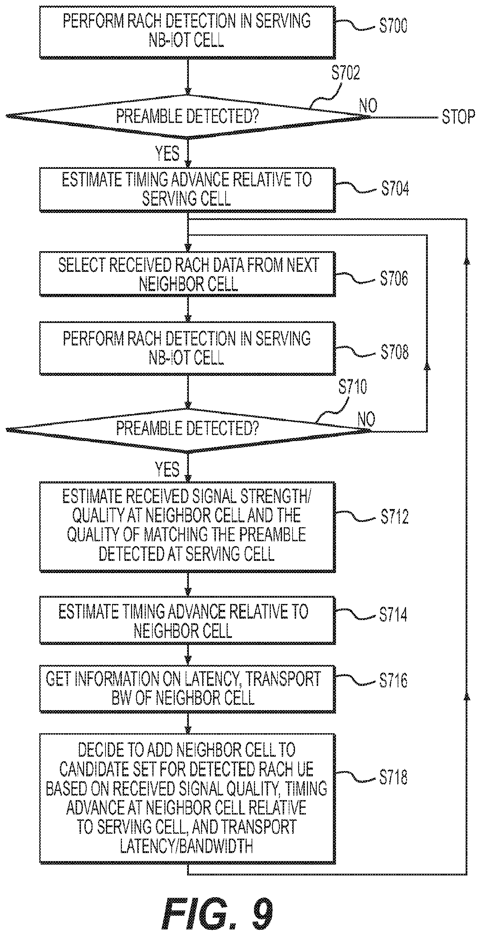

FIG. 9 illustrates a flowchart for a method of candidate set 206 formation at the serving base station 10, in accordance with an example embodiment. In an embodiment, this method is performed by the processor 100 of the serving node 10.

In step S700, the processor 100m first performs RACH detection in the serving cell 10 based on the RACH data received at the serving cell 10.

In step S702, the processor 100 detects if a RACH preamble is in the serving cell's own received RACH signal. If the RACH preamble is not detected, then this method ceases.

In step S706, if the RACH preamble is detected, then the processor 100 also determines whether the same preamble is present in the RACH data forwarded from the neighbor cell 10al10n.

In step S706, the processor 100 selects neighbor cells 202 whose data matches the serving cell 10 received detected RACH preamble most strongly (e.g. matched filter output or received signal level is sufficiently high) by estimating a timing advance value for the UE 20 relative to the neighbor cell 10al10n. The processor 100 includes those matches in the candidate set 206 of the RACH UE 20 in the serving cell.

In step S708, the processor 100 of the serving cell 10 performs RACH detection in serving NB-IOT cell 10.

In step S710, is a preamble is not detected in the serving NB-IOT cell 10, then the processor 100 repeats step S706. Otherwise, in step S712, the processor 100 estimates received signal strength and quality of neighbor cells 10al10n and the quality of matching preambles detected at the serving cell 10.

In step S714, the processor 100 estimates a timing advance relative to the neighbor cells 10al10n.

In step S7161, the processor 100 obtains information on latency, transport bandwidth of the neighbor cells 10al10n.

In step S718, the processor 100 further selects cells for either the neighbor set 202 or candidate set 206 by further filtering cells based on (i) received signal strength at serving cell 10 (i.e. need for additional helper data is lower if received signal at serving cell is stronger, and candidate cells may be dropped if serving cell signal is already strong enough), (ii) timing advance at serving cell - longer timing advance at the serving cell indicates that UE is further away from serving cell, so maybe greater need for employing UL CoMP, and then neighbor cells are more likely to be retained in the candidate set, (iii) difference in timing advance between serving cell and candidate cell - if the difference is low, then that indicates that the distance from the UE to the candidate cell is similar to the distance between UE and candidate cell, indicating that the UE's signal received at the candidate cell is likely to be comparable in strength to the UE's signal received at the serving cell.

Based on the example embodiments described above, it is noted that some example embodiments are described as processes or methods depicted as flowcharts. Although the flowcharts describe the operations as sequential processes, many of the operations may be performed in parallel, concurrently or simultaneously. In addition, the order of operations may be re-arranged. The processes may be terminated when their operations are completed, but may also have additional steps not included in the figure. The processes may correspond to methods, functions, procedures, subroutines, subprograms, etc.

Methods discussed above, some of which are illustrated by the flow charts, may be implemented by hardware, software, firmware, middleware, microcode, hardware description languages, or any combination thereof. When implemented in software, firmware, middleware or microcode, the program code or code segments to perform the necessary tasks may be stored in a machine or computer readable medium such as a storage medium, such as a non-transitory storage medium. A processor(s) may perform the necessary tasks.

Specific structural and functional details disclosed herein are merely representative for purposes of describing example embodiments. These example embodiments may, however, be embodied in many alternate forms and should not be construed as limited to only the embodiments set forth herein.

Example embodiments having thus been described, it will be obvious that the same may be varied in many ways. Such variations are not to be regarded as a departure from the intended scope of example embodiments, and all such modifications as would be obvious to one skilled in the art are intended to be included within the scope of the following claims.

## Claims

1. A method of a network node of a communication network, the method comprising:
receiving, by at least one first processor, neighbor cell information of neighbor cells from at least one base station of a preliminary neighbor set of base stations, wherein the neighbor cell information includes at least one of an available transport bandwidth or latency information of each of the neighbor cells,
selecting, by the at least one first processor, at least one neighbor cell from among the neighbor cells based on at least one of the available transport bandwidth or latency information in the neighbor cell information to form a neighbor set of base stations;
notifying, by the at least one first processor, one or more base stations of the neighbor set of base stations of a random access channel opportunity associated with a first transmission time interval;
receiving, by the at least one first processor, signal information regarding a signal received during the random access channel opportunity from one or more base stations of the neighbor set of base stations for the first transmission time interval;
determining, by the at least one first processor, a candidate set of base stations for the first transmission time interval based on the signal information from the one or more base stations of the neighbor set of base stations; and
controlling, by the at least one first processor, an operation of joint reception in data communications with a user equipment using the network node, as a serving base station for the user equipment, and at least one base station of the candidate set of base stations.

2. The method of claim 1, further comprising:
transmitting a first set of preambles to the one or more base stations of the neighbor set of base stations, the first set of preambles including at least a root sequence index and cyclic shifts for the random access channel opportunity, and
receiving random access channel detection information from the one or more base stations of the neighbor set of base stations based on the first set of preambles, the random access channel detection information being the signal information.

3. The method of claim 1, wherein determining the candidate set of base stations includes:
receiving a first random access channel signal and performing random access channel detection based on a random access channel opportunity associated with the first transmission time interval,
detecting a first preamble in the first random access channel signal,
detecting if the first preamble is in the signal information from the one or more base stations of the neighbor set of base stations, and
selecting the candidate set of base stations, from the neighbor set of base stations, based on the detecting of the first preamble in the signal information.

4. The method of claim 1, further comprising:
estimating timing advance information for the one or more base stations of the candidate set of base stations relative to the user equipment, and
further selecting the candidate set of base stations based on the timing advance information.

5. The method of claim 1, wherein determining the candidate set of base stations further includes:
further selecting the candidate set of base stations based on a received signal strength information.

6. The method of claim 1, further comprising:
performing data communications with the user equipment during a second transmission time interval that follows the first transmission time interval, the performing of the data communications occurring following the determining of the candidate set of base stations,
receiving, from one or more base stations of the candidate set of base stations, an indication of a received signal corresponding to an uplink shared channel transmission by the user equipment during the second transmission time interval, and
determining a decoding status of the data communications with the user equipment based on the indication of the received signal.

7. The method of claim 1, further comprising:
obtaining cell identifier information and neighbor list information from a first base station in the neighbor set of base stations,
wherein the network node is hosted in at least one second processor of the first base station.

8. A network node of a communication network, comprising:
at least one memory storing computer-readable instructions, and
at least one first processor configured to execute the computer-readable instructions such that the at least one first processor is configured to:
receive neighbor cell information of neighbor cells from at least one base station of a preliminary neighbor set of base stations, wherein the neighbor cell information includes at least one of an available transport bandwidth or latency information of each of the neighbor cells,
select at least one neighbor cell from among the neighbor cells based on at least one of the available transport bandwidth or latency information in the neighbor cell information to form a neighbor set of base stations,
notify one or more base stations of the neighbor set of base stations of a random access channel opportunity associated with a first transmission time interval,
receive signal information regarding a signal received during the random access channel opportunity from one or more base stations of the neighbor set of base stations for the first transmission time interval,
determine a candidate set of base stations for the first transmission time interval based on the signal information from the one or more base stations of the neighbor set of base stations, and
control an operation of joint reception in data communications with a user equipment using the network node, as a serving base station for the user equipment, and at least one base station of the candidate set of base stations.

9. The network node of claim 8, wherein the at least one first processor is further configured to:
transmitting a first set of preambles to the one or more base stations of the neighbor set of base stations, the first set of preambles including at least a root sequence index and cyclic shifts for the random access channel opportunity, and
receiving random access channel detection information from the one or more base stations of the neighbor set of base stations based on the first set of preambles, the random access channel detection information being the signal information.

10. The network node of claim 8, wherein the at least one first processor is further configured to determine the candidate set of base stations by:
receiving a first random access channel signal and performing random access channel detection based on a random access channel opportunity associated with the first transmission time interval,
detecting a first preamble in the first random access channel signal,
detecting if the first preamble is in the signal information from the one or more base stations of the neighbor set of base stations, and
selecting the candidate set of base stations, from the neighbor set of base stations, based on the detecting of the first preamble in the signal information.

11. The network node of claim 8, wherein the at least one first processor is further configured to:
estimate timing advance information for the one or more base stations of the candidate set of base stations relative to the user equipment, and
further select the candidate set of base stations based on the timing advance information.

12. The network node of claim 8, wherein the at least one first processor is further configured to determine the candidate set of base stations by:
further selecting the candidate set of base stations based on a received signal strength information.

13. The network node of claim 8, wherein the at least one first processor is further configured to:
perform data communications with the user equipment during a second transmission time interval that follows the first transmission time interval, the performing of the data communications occurring following the determining of the candidate set of base stations,
receive, from one or more base stations of the candidate set of base stations, an indication of a received signal corresponding to an uplink shared channel transmission by the user equipment during the second transmission time interval, and
determine a decoding status of the data communications with the user equipment based on the indication of the received signal.

14. The network node of claim 8, wherein the at least one first processor is further configured to:
obtain cell identifier information and neighbor list information from a first base station in the neighbor set of base stations,
wherein the network node is hosted in at least one second processor of the first base station.

15. A computer program product including instructions that, when executed by a computer, cause the computer to perform the method according to any one of claims 8 to 14.

## Patentansprüche

1. Verfahren eines Netzwerkknotens eines Kommunikationsnetzwerks, wobei das Verfahren Folgendes umfasst:
Empfangen von Nachbarzelleninformationen von Nachbarzellen durch mindestens einen ersten Prozessor von mindestens einer Basisstation eines vorläufigen Nachbarsatzes von Basisstationen, wobei die Nachbarzelleninformationen mindestens eines von einer verfügbaren Transportbandbreite und Latenzinformationen von jeder der Nachbarzellen beinhalten,
Auswählen von mindestens einer Nachbarzelle der Nachbarzellen durch den mindestens einen Prozessor auf Basis von mindestens einem der verfügbaren Transportbandbreite oder der Latenzinformationen in den Nachbarzelleninformationen, um einen Nachbarsatz von Basisstationen zu bilden;
Benachrichtigen von einer oder mehreren Basisstationen des Nachbarsatzes von Basisstationen durch den mindestens einen Prozessor über eine Direktzugriffskanalgelegenheit, die mit einem ersten Übertragungszeitintervall verknüpft ist;
Empfangen von Signalinformationen, die sich auf ein Signal beziehen, das während der Direktzugriffskanalgelegenheit von einer oder mehreren Basisstationen des Nachbarsatzes von Basisstationen für das erste Übertragungszeitintervall empfangen wurde, durch den mindestens einen Prozessor;
Bestimmen eines Kandidatensatzes von Basisstationen für das erste Übertragungszeitintervall durch den mindestens einen Prozessor auf Basis der Signalinformationen von der einen oder den mehreren Basisstationen des Nachbarsatzes von Basisstationen; und
Steuern eines Betriebs eines gemeinsamen Empfangs in Datenkommunikation mit einer Teilnehmereinrichtung durch den mindestens einen Prozessor unter Verwendung des Netzwerkknotens als eine bedienende Basisstation für die Teilnehmereinrichtung und mindestens einer Basisstation des Kandidatensatzes von Basisstationen.

2. Verfahren nach Anspruch 1, das ferner Folgendes umfasst:
Übertragen eines ersten Satzes von Präambeln zu der einen oder den mehreren Basisstationen des Nachbarsatzes von Basisstationen, wobei der erste Satz von Präambeln mindestens einen Wurzelsequenzindex und zyklische Verschiebungen für die Direktzugriffskanalgelegenheit beinhaltet, und
Empfangen von Direktzugriffskanaldetektionsinformationen von der einen oder den mehreren Basisstationen des Nachbarsatzes von Basisstationen auf Basis des ersten Satzes von Präambeln, wobei es sich bei den Direktzugriffskanaldetektionsinformationen um die Signalinformationen handelt.

3. Verfahren nach Anspruch 1, wobei das Bestimmen des Kandidatensatzes von Basisstationen Folgendes beinhaltet:
Empfangen eines ersten Direktzugriffskanalsignals und Durchführen einer Direktzugriffskanaldetektion auf Basis einer Direktzugriffskanalgelegenheit, die mit dem ersten Übertragungszeitintervall verknüpft ist,
Detektieren einer ersten Präambel im ersten Direktzugriffskanalsignal,
Detektieren, ob die erste Präambel in den Signalinformationen von der einen oder den mehreren Basisstationen des Nachbarsatzes von Basisstationen enthalten ist, und
Auswählen des Kandidatensatzes von Basisstationen aus dem Nachbarsatz von Basisstationen auf Basis des Detektierens der ersten Präambel in den Signalinformationen.

4. Verfahren nach Anspruch 1, das ferner Folgendes umfasst:
Schätzen von Zeitvorlaufinformationen für die eine oder die mehreren Basisstationen des Kandidatensatzes von Basisstationen relativ zur Teilnehmereinrichtung, und
weiteres Auswählen des Kandidatensatzes von Basisstationen auf Basis der Zeitvorlaufinformationen.

5. Verfahren nach Anspruch 1, wobei das Bestimmen des Kandidatensatzes von Basisstationen ferner Folgendes beinhaltet:
weiteres Auswählen des Kandidatensatzes von Basisstationen auf Basis von Empfangssignalstärkeinformationen.

6. Verfahren nach Anspruch 1, das ferner Folgendes umfasst:
Durchführen einer Datenkommunikation mit der Teilnehmereinrichtung während eines zweiten Übertragungszeitintervalls, das dem ersten Übertragungszeitintervall folgt, wobei das Durchführen der Datenkommunikation nach dem Bestimmen des Kandidatensatzes von Basisstationen erfolgt,
Empfangen einer Anzeige eines empfangenen Signals, das einer Übertragung auf einem gemeinsam verwendeten Uplinkkanal durch die Teilnehmereinrichtung während des zweiten Übertragungszeitintervalls entspricht, von einer oder mehreren Basisstationen des Kandidatensatzes von Basisstationen, und
Bestimmen eines Decodierstatus der Datenkommunikation mit der Teilnehmereinrichtung auf Basis der Anzeige des empfangenen Signals.

7. Verfahren nach Anspruch 1, das ferner Folgendes umfasst:
Erhalten von Zellkennungsinformationen und Nachbarlisteninformationen von einer ersten Basisstation im Nachbarsatz von Basisstationen,
wobei der Netzwerkknoten in mindestens einem zweiten Prozessor der ersten Basisstation gehostet wird.

8. Netzwerkknoten eines Kommunikationsnetzwerks, der Folgendes umfasst:
mindestens einen Speicher, in dem computerlesbare Anweisungen gespeichert sind, und
mindestens einen ersten Prozessor, der dazu ausgelegt ist, die computerlesbaren Anweisungen auszuführen, derart, dass der mindestens eine erste Prozessor zu Folgendem ausgelegt ist:
Empfangen von Nachbarzelleninformationen von Nachbarzellen von mindestens einer Basisstation eines vorläufigen Nachbarsatzes von Basisstationen, wobei die Nachbarzelleninformationen mindestens eines von einer verfügbaren Transportbandbreite und Latenzinformationen von jeder der Nachbarzellen beinhalten,
Auswählen von mindestens einer Nachbarzelle der Nachbarzellen auf Basis von mindestens einem der verfügbaren Transportbandbreite oder der Latenzinformationen in den Nachbarzelleninformationen, um einen Nachbarsatz von Basisstationen zu bilden,
Benachrichtigen von einer oder mehreren Basisstationen des Nachbarsatzes von Basisstationen über eine Direktzugriffskanalgelegenheit, die mit einem ersten Übertragungszeitintervall verknüpft ist,
Empfangen von Signalinformationen, die sich auf ein Signal beziehen, das während der Direktzugriffskanalgelegenheit von einer oder mehreren Basisstationen des Nachbarsatzes von Basisstationen für das erste Übertragungszeitintervall empfangen wurde,
Bestimmen eines Kandidatensatzes von Basisstationen für das erste Übertragungszeitintervall auf Basis der Signalinformationen von der einen oder den mehreren Basisstationen des Nachbarsatzes von Basisstationen, und
Steuern eines Betriebs eines gemeinsamen Empfangs in Datenkommunikation mit einer Teilnehmereinrichtung unter Verwendung des Netzwerkknotens als eine bedienende Basisstation für die Teilnehmereinrichtung und mindestens einer Basisstation des Kandidatensatzes von Basisstationen.

9. Netzwerkknoten nach Anspruch 8, wobei der mindestens eine erste Prozessor ferner zu Folgendem ausgelegt ist:
Übertragen eines ersten Satzes von Präambeln zu der einen oder den mehreren Basisstationen des Nachbarsatzes von Basisstationen, wobei der erste Satz von Präambeln mindestens einen Wurzelsequenzindex und zyklische Verschiebungen für die Direktzugriffskanalgelegenheit beinhaltet, und
Empfangen von Direktzugriffskanaldetektionsinformationen von der einen oder den mehreren Basisstationen des Nachbarsatzes von Basisstationen auf Basis des ersten Satzes von Präambeln, wobei es sich bei den Direktzugriffskanaldetektionsinformationen um die Signalinformationen handelt.

10. Netzwerkknoten nach Anspruch 8, wobei der mindestens eine erste Prozessor dazu ausgelegt ist, den Kandidatensatz von Basisstationen durch Folgendes zu bestimmen:
Empfangen eines ersten Direktzugriffskanalsignals und Durchführen einer Direktzugriffskanaldetektion auf Basis einer Direktzugriffskanalgelegenheit, die mit dem ersten Übertragungszeitintervall verknüpft ist,
Detektieren einer ersten Präambel im ersten Direktzugriffskanalsignal,
Detektieren, ob die erste Präambel in den Signalinformationen von der einen oder den mehreren Basisstationen des Nachbarsatzes von Basisstationen enthalten ist, und
Auswählen des Kandidatensatzes von Basisstationen aus dem Nachbarsatz von Basisstationen auf Basis des Detektierens der ersten Präambel in den Signalinformationen.

11. Netzwerkknoten nach Anspruch 8, wobei der mindestens eine erste Prozessor ferner zu Folgendem ausgelegt ist:
Schätzen von Zeitvorlaufinformationen für die eine oder die mehreren Basisstationen des Kandidatensatzes von Basisstationen relativ zur Teilnehmereinrichtung, und
weiteres Auswählen des Kandidatensatzes von Basisstationen auf Basis der Zeitvorlaufinformationen.

12. Netzwerkknoten nach Anspruch 8, wobei der mindestens eine erste Prozessor dazu ausgelegt ist, den Kandidatensatz von Basisstationen durch Folgendes zu bestimmen:
weiteres Auswählen des Kandidatensatzes von Basisstationen auf Basis von Empfangssignalstärkeinformationen.

13. Netzwerkknoten nach Anspruch 8, wobei der mindestens eine erste Prozessor ferner zu Folgendem ausgelegt ist:
Durchführen einer Datenkommunikation mit der Teilnehmereinrichtung während eines zweiten Übertragungszeitintervalls, das dem ersten Übertragungszeitintervall folgt, wobei das Durchführen der Datenkommunikation nach dem Bestimmen des Kandidatensatzes von Basisstationen erfolgt,
Empfangen einer Anzeige eines empfangenen Signals, das einer Übertragung auf einem gemeinsam verwendeten Uplinkkanal durch die Teilnehmereinrichtung während des zweiten Übertragungszeitintervalls entspricht, von einer oder mehreren Basisstationen des Kandidatensatzes von Basisstationen, und
Bestimmen eines Decodierstatus der Datenkommunikation mit der Teilnehmereinrichtung auf Basis der Anzeige des empfangenen Signals.

14. Netzwerkknoten nach Anspruch 8, wobei der mindestens eine erste Prozessor ferner zu Folgendem ausgelegt ist:
Erhalten von Zellkennungsinformationen und Nachbarlisteninformationen von einer ersten Basisstation im Nachbarsatz von Basisstationen,
wobei der Netzwerkknoten in mindestens einem zweiten Prozessor der ersten Basisstation gehostet wird.

15. Computerprogrammprodukt, das Anweisungen beinhaltet, die, wenn sie von einem Computer ausgeführt werden, den Computer veranlassen, das Verfahren nach einem der Ansprüche 8 bis 14 durchzuführen.

## Revendications

1. Procédé d'un noeud de réseau d'un réseau de communication, le procédé comprenant :
la réception, par au moins un premier processeur, d'informations de cellules voisines de cellules voisines d'au moins une station de base d'un ensemble préliminaire de stations de base voisines, dans lequel les informations de cellules voisines comportent une largeur de bande de transport et/ou des informations de latence disponibles de chacune des cellules voisines,
la sélection, par l'au moins un premier processeur, d'au moins un cellule voisine parmi les cellules voisines sur la base de la largeur de bande de transport et/ou des informations de latence disponibles dans les informations de cellules voisines pour former un ensemble de stations de base voisines ;
la notification, par l'au moins un premier processeur, d'une ou plusieurs stations de base de l'ensemble de stations de base voisines d'une opportunité de canal d'accès aléatoire associée à un premier intervalle de temps de transmission ;
la réception, par l'au moins un premier processeur, d'informations de signal concernant un signal reçu pendant l'opportunité de canal d'accès aléatoire des une ou plusieurs stations de base de l'ensemble de stations de base voisines pour le premier intervalle de temps de transmission ;
la détermination, par l'au moins un premier processeur, d'un ensemble de stations de base candidates pour le premier intervalle de temps de transmission sur la base des informations de signal provenant des une ou plusieurs stations de base de l'ensemble de stations de base voisines ; et
le contrôle, par l'au moins un premier processeur, d'une opération de réception conjointe dans les communications de données avec un équipement utilisateur à l'aide du noeud de réseau, en tant que station de base de desserte pour l'équipement utilisateur, et au moins une station de base de l'ensemble de stations de base candidates.

2. Procédé selon la revendication 1, comprenant en outre :
la transmission d'un premier ensemble de préambules aux une ou plusieurs stations de base de l'ensemble de stations de base voisines, le premier ensemble de préambules comportant au moins un indice de séquence racine et des décalages cycliques pour l'opportunité de canal d'accès aléatoire, et
la réception d'informations de détection de canal d'accès aléatoire des une ou plusieurs stations de base de l'ensemble de stations de base voisines sur la base du premier ensemble de préambules, les informations de détection de canal d'accès aléatoire étant les informations de signal.

3. Procédé selon la revendication 1, dans lequel la détermination de l'ensemble de stations de base candidates comporte :
la réception d'un premier signal de canal d'accès aléatoire et la réalisation d'une détection de canal d'accès aléatoire sur la base d'une opportunité de canal d'accès aléatoire associée au premier intervalle de temps de transmission,
la détection d'un premier préambule dans le premier signal de canal d'accès aléatoire,
la détection de la présence éventuelle du premier préambule dans les informations de signal provenant des une ou plusieurs stations de base de l'ensemble de stations de base voisines, et
la sélection de l'ensemble de stations de base candidates, dans l'ensemble de stations de base voisines, sur la base de la détection du premier préambule dans les informations de signal.

4. Procédé selon la revendication 1, comprenant en outre :
l'estimation d'informations d'avance temporelle pour les une ou plusieurs stations de base de l'ensemble de stations de base candidates par rapport à l'équipement utilisateur, et
en outre, la sélection de l'ensemble de stations de base candidates sur la base des informations d'avance temporelle.

5. Procédé selon la revendication 1, dans lequel la détermination de l'ensemble de stations de base candidates comporte en outre :
en outre, la sélection de l'ensemble de stations de base candidates sur la base d'informations de force de signal reçu.

6. Procédé selon la revendication 1, comprenant en outre :
la réalisation de communications de données avec l'équipement utilisateur pendant un deuxième intervalle de temps de transmission qui suit le premier intervalle de temps de transmission, la réalisation des communications de données se produisant après la détermination de l'ensemble de stations de base candidates,
la réception, des une ou plusieurs stations de base de l'ensemble de stations de base candidates, d'une indication d'un signal reçu correspondant à une transmission de canal partagé de liaison montante par l'équipement utilisateur pendant le deuxième intervalle de temps de transmission, et
la détermination d'un état de décodage des communications de données avec l'équipement utilisateur sur la base de l'indication du signal reçu.

7. Procédé selon la revendication 1, comprenant en outre :
l'obtention d'informations d'identifiant de cellule et d'informations de liste de voisins à partir d'une première station de base dans l'ensemble de stations de base voisines,
dans lequel le noeud de réseau est hébergé dans au moins un deuxième processeur de la première station de base.

8. Noeud de réseau d'un réseau de communication, comprenant :
au moins une mémoire stockant des instructions lisibles par ordinateur, et
au moins un premier processeur configuré pour exécuter les instructions lisibles par ordinateur de sorte que l'au moins un premier processeur soit configuré pour :
recevoir des informations de cellules voisines de cellules voisines d'au moins une station de base d'un ensemble préliminaire de stations de base voisines, dans lequel les informations de cellules voisines comportent une largeur de bande de transport et/ou des informations de latence disponibles de chacune des cellules voisines,
sélectionner au moins un cellule voisine parmi les cellules voisines sur la base de la largeur de bande de transport et/ou des informations de latence disponibles dans les informations de cellules voisines pour former un ensemble de stations de base voisines,
notifier une ou plusieurs stations de base de l'ensemble de stations de base voisines d'une opportunité de canal d'accès aléatoire associée à un premier intervalle de temps de transmission,
recevoir des informations de signal concernant un signal reçu pendant l'opportunité de canal d'accès aléatoire des une ou plusieurs stations de base de l'ensemble de stations de base voisines pour le premier intervalle de temps de transmission,
déterminer un ensemble de stations de base candidates pour le premier intervalle de temps de transmission sur la base des informations de signal provenant des une ou plusieurs stations de base de l'ensemble de stations de base voisines, et
contrôler une opération de réception conjointe dans les communications de données avec un équipement utilisateur à l'aide du noeud de réseau, en tant que station de base de desserte pour l'équipement utilisateur, et au moins une station de base de l'ensemble de stations de base candidates.

9. Noeud de réseau selon la revendication 8, dans lequel l'au moins un premier processeur est en outre configuré pour :
transmettre un premier ensemble de préambules aux une ou plusieurs stations de base de l'ensemble de stations de base voisines, le premier ensemble de préambules comportant au moins un indice de séquence racine et des décalages cycliques pour l'opportunité de canal d'accès aléatoire, et
recevoir des informations de détection de canal d'accès aléatoire des une ou plusieurs stations de base de l'ensemble de stations de base voisines sur la base du premier ensemble de préambules, les informations de détection de canal d'accès aléatoire étant les informations de signal.

10. Noeud de réseau selon la revendication 8, dans lequel l'au moins un premier processeur est en outre configuré pour déterminer l'ensemble de stations de base candidates :
en recevant un premier signal de canal d'accès aléatoire et en réalisant une détection de canal d'accès aléatoire sur la base d'une opportunité de canal d'accès aléatoire associée au premier intervalle de temps de transmission,
en détectant un premier préambule dans le premier signal de canal d'accès aléatoire,
en détectant la présence éventuelle du premier préambule dans les informations de signal provenant des une ou plusieurs stations de base de l'ensemble de stations de base voisines, et
en sélectionnant l'ensemble de stations de base candidates, dans l'ensemble de stations de base voisines, sur la base de la détection du premier préambule dans les informations de signal.

11. Noeud de réseau selon la revendication 8, dans lequel l'au moins un premier processeur est en outre configuré pour :
estimer des informations d'avance temporelle pour les une ou plusieurs stations de base de l'ensemble de stations de base candidates par rapport à l'équipement utilisateur, et
sélectionner en outre l'ensemble de stations de base candidates sur la base des informations d'avance temporelle.

12. Noeud de réseau selon la revendication 8, dans lequel l'au moins un premier processeur est en outre configuré pour déterminer l'ensemble de stations de base candidates :
en sélectionnant en outre l'ensemble de stations de base candidates sur la base d'informations de force de signal reçu.

13. Noeud de réseau selon la revendication 8, dans lequel l'au moins un premier processeur est en outre configuré pour :
réaliser des communications de données avec l'équipement utilisateur pendant un deuxième intervalle de temps de transmission qui suit le premier intervalle de temps de transmission, the la réalisation des communications de données se produisant après la détermination de l'ensemble de stations de base candidates,
recevoir, des une ou plusieurs stations de base de l'ensemble de stations de base candidates, une indication d'un signal reçu correspondant à une transmission de canal partagé de liaison montante par l'équipement utilisateur pendant le deuxième intervalle de temps de transmission, et
déterminer un état de décodage des communications de données avec l'équipement utilisateur sur la base de l'indication du signal reçu.

14. Noeud de réseau selon la revendication 8, dans lequel l'au moins un premier processeur est en outre configuré pour :
obtenir des informations d'identifiant de cellule et informations de liste de voisins à partir d'une première station de base dans l'ensemble de stations de base voisines.
dans lequel le noeud de réseau est hébergé dans au moins un deuxième processeur de la première station de base.

15. Produit programme informatique comprenant des instructions qui, lorsqu'elles sont exécutées par un ordinateur, amènent l'ordinateur à réaliser le procédé selon l'une des revendications 8 à 14.
